# EUROPEAN PATENT APPLICATION

(11) **EP 4 575 405 A1**
(43) Date of publication of application: **25.06.2025**
(21) Application number: 24221382.5
(22) Date of filing: 19.12.2024
(51) Int. Cl.: G01C 21/20, G01C 21/00, G01C 21/36

(54) **METHODS AND SYSTEMS FOR DISPLAYING A MAP OF MARKERS IN AN AREA**

(30) Priority: 19.12.2023 US 202363612167 P; 28.02.2024 US 202418590489
(71) Applicant: Tyco Fire & Security GmbH, 8212 Neuhausen am Rheinfall (CH)
(72) Inventor: PEARSON, Robert, 8212 Neuhausen am Rheinfall (CH); SULJIC, Sanela, 8212 Neuhausen am Rheinfall (CH)
(74) Representative: Meissner Bolte Nürnberg

(57) **Abstract**

Systems and methods are disclosed for generating, based on a marker data set of multiple markers, a boundary tile that encompasses the multiple markers on the map, assigning each of the markers in the multiple markers to one subtile in a grid of subtiles, wherein each subtile in the grid of subtiles represents a portion of the boundary tile, and for at least one subtile in the grid of subtiles having at least one of the multiple markers assigned, displaying, on the map, a representative marker of the at least one of the multiple markers having a location closest to a center of the at least one subtile.

## Description

### CLAIM OF PRIORITY UNDER 35 U.S.C. §119

The present Application for Patent claims priority to Provisional Patent Application No. 63/612,167, entitled "METHODS AND SYSTEMS FORDISPLAYING A MAP OF MARKERS IN AN AREA" filed December 19, 2023, which is assigned to the assignee hereof and hereby expressly incorporated by reference herein for all purposes.

### BACKGROUND

The present disclosure relates to building management systems, and more particularly to displaying maps identifying markers in or around a building.

Building management systems are capable of displaying, or providing data to display, maps of markers in a building or corresponding area. The markers may be displayed on the map (e.g., as pins) at an associated location, which may be based on geographic information system (GIS) data for the markers. The markers may correspond to various building markers, such as access control related markers, and/or may include building assets (e.g., doors, cameras, sensors, etc.), a state of the assets (e.g., a triggered alarm or other event detected by a sensor), etc.). When a dataset includes a sufficiently larger number of markers, however, rendering all of the markers on a map can make it difficult for a user to assess meaning from the data. For example, the map may be nearly completely covered with markers, making it difficult to see buildings on the map that include the markers. In some cases, displaying too many markers may also overwhelm the system performing the rendering. For example, a browser or other application displaying an interface including the map and the markers may become overwhelmed by displaying the markers and/or where the map is moved causing re-rendering of the markers on the moved map. This may cause the system to crash or throw an exception or other error when the number of markers displayed exceeds a certain amount. Even if the system does not crash, displaying too many markers at one time, or moving the map, may at least have a negative impact on performance of the system.

### SUMMARY

This summary is provided to introduce a selection of concepts in a simplified form that are further described below in the DETAILED DESCRIPTION. This summary is not intended to identify key features of the claimed subject matter, nor is it intended to be used as an aid in determining the scope of the claimed subject matter.

In some aspects, the techniques described herein relate to a computer-implemented method for displaying markers on a map including generating, based on a marker data set of multiple markers, a boundary tile that encompasses the multiple markers on the map, assigning each of the markers in the multiple markers to one subtile in a grid of subtiles, wherein each subtile in the grid of subtiles represents a portion of the boundary tile, and for at least one subtile in the grid of subtiles having at least one of the multiple markers assigned, displaying, on the map, a representative marker of the at least one of the multiple markers having a location closest to a center of the at least one subtile.

In some aspects, the techniques described herein relate to an apparatus for displaying markers on a map, including one or more memories, and one or more processors coupled to the one or more memories and configured to execute instructions stored on the one or more memories to generate, based on a marker data set of multiple markers, a boundary tile that encompasses the multiple markers on the map, assign each of the markers in the multiple markers to one subtile in a grid of subtiles, wherein each subtile in the grid of subtiles represents a portion of the boundary tile, and for at least one subtile in the grid of subtiles having at least one of the multiple markers assigned, display, on the map, a representative marker of the at least one of the multiple markers having a location closest to a center of the at least one subtile.

In another aspect, one or more computer-readable media storing instructions, executable by one or more processors, for indicating occupancy of a point of interest in a room are provided. The instructions include instructions for generating, based on a marker data set of multiple markers, a boundary tile that encompasses the multiple markers on the map, assigning each of the markers in the multiple markers to one subtile in a grid of subtiles, wherein each subtile in the grid of subtiles represents a portion of the boundary tile, and for at least one subtile in the grid of subtiles having at least one of the multiple markers assigned, displaying, on the map, a representative marker of the at least one of the multiple markers having a location closest to a center of the at least one subtile.

Further aspects of the present disclosure are described in more details below.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a block diagram of examples components of a computer device that may implement one or more of the features, according to implementations of the present disclosure; and
FIG. 2 is a flowchart of an example of a method for displaying a map including markers related to certain objects, according to implementations of the present disclosure.
FIG. 3 is a flowchart of an example of a method for displaying a map including markers related to certain objects based on zoom level, according to implementations of the present disclosure.
FIG. 4 illustrates an example of a map displayed on an interface that includes all markers in an area on the map.
FIG. 5 illustrates an example of a map displayed on an interface that includes one representative marker per grid of subtiles at a first zoom level, according to implementations of the present disclosure.
FIG. 6 illustrates an example of a map displayed on an interface that includes one representative marker per grid of subtiles at a second zoom level, according to implementations of the present disclosure.
FIG. 7 illustrates an example of a map displayed on an interface that includes all markers in the portion of subtiles being displayed at a third zoom level, according to implementations of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

The present disclosure addresses one or more shortcomings of building management systems, or other systems, that display maps including markers corresponding to objects on the map, by providing using representative markers in subtile portions of the map to represent multiple markers within the subtile. This can result in a less number of markers displayed on an initial map (e.g., a map that is at an initial zoom level), which can improve performance associated with displaying the markers, moving the map with the displayed markers, etc. For example, the markers can be automatically bundled into groups based on latitude and longitude positioning on the map, and a representative marker can be selected or assigned to represent the markers in the group - the representative marker can be one of the markers in the group (e.g., a marker at a most central position of a subtile associated with the group of markers), or can be a marker with a position selected based on other considerations. Displaying a lesser number of markers on a given map can limit the load on the system rendering the map and markers as compared to rendering all markers. In addition, displaying a lesser number of markers can help the user visualize the data in an intuitive fashion as compared to rendering all markers (e.g., where a larger number of markers may overlap, etc.). As the mapped is zoomed, in some examples, the actual markers for one or more subtiles that are displayed at the zoom level can be rendered to provide a more accurate view of the markers at respective locations within the one or more subtiles.

Turning now to the figures, example aspects are depicted with reference to one or more modules or components described herein, where modules or components in dashed lines may be optional.

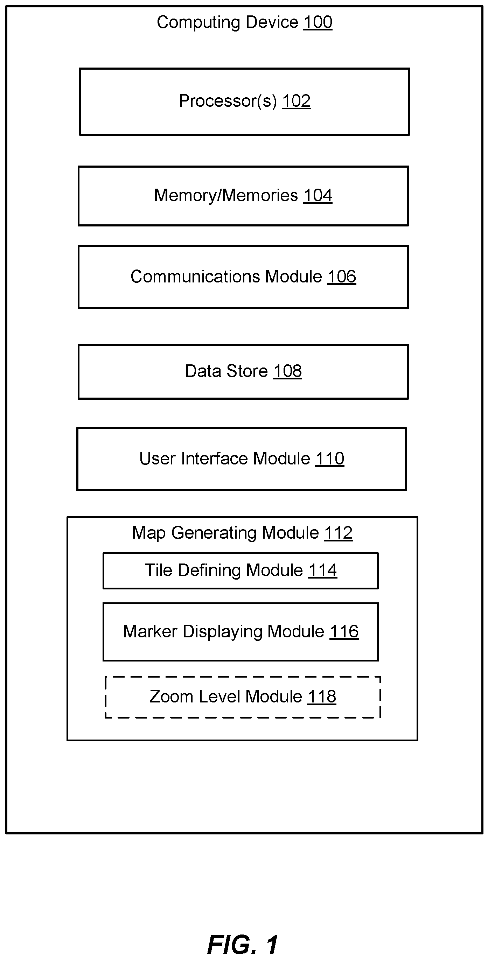

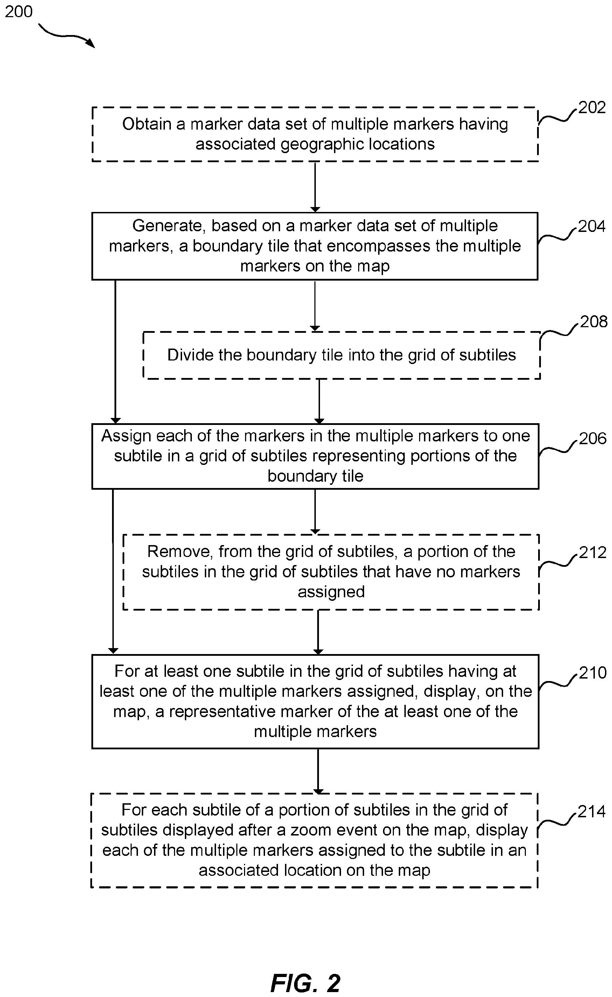

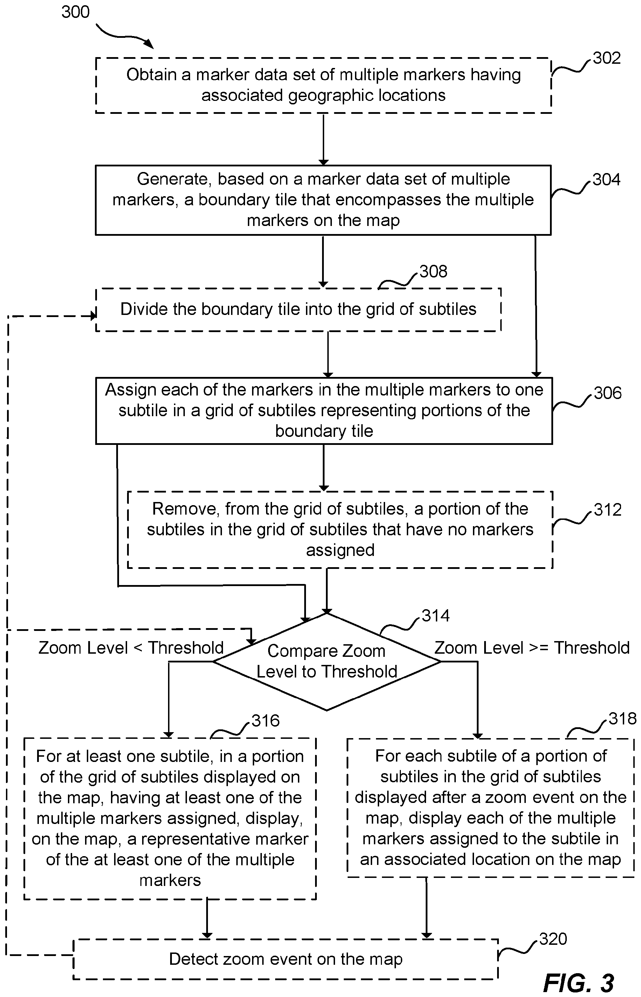

Referring to FIG. 1, a computing device 100 may implement all or a portion of the functionality described in FIGs. 2 or 3, or otherwise described herein. In one example, the computing device 100 may be or may include at least a portion of a building management system, or any other module or component described herein with reference to FIGs. 2 or 3. The computing device 100 may include one or more processors 102 which may be configured to execute or implement software, hardware, and/or firmware modules that perform some or all of the functionality described herein with reference to FIGs. 2 or 3. For example, the processor(s) 102 may be configured to execute or implement software, hardware, and/or firmware modules that perform some or all of the functionality described herein, or any other module or component described herein with reference to FIGs. 2 or 3.

The processor(s) 102 may be a micro-controller, an application-specific integrated circuit (ASIC), or a field-programmable gate array (FPGA), and/or may include a single or multiple set of processors or multi-core processors. Moreover, the processor(s) 102 may be implemented as an integrated processing system and/or a distributed processing system. The computing device 100 may further include memory/memories 104, such as for storing local versions of applications being executed by the processor(s) 102, related instructions, parameters, etc. The memory/memories 104 may include a type of memory usable by a computer, such as random access memory (RAM), read only memory (ROM), tapes, magnetic discs, optical discs, volatile memory, non-volatile memory, and any combination thereof. Additionally, the processor(s) 102 and the memory/memories 104 may include and execute an operating system executing on the processor(s) 102, one or more applications, display drivers, etc., and/or other modules or components of the computing device 100.

Further, the computing device 100 may include a communications module 106 that provides for establishing and maintaining communications with one or more other devices, parties, entities, etc. utilizing hardware, software, and services. The communications module 106 may carry communications between modules on the computing device 100, as well as between the computing device 100 and external devices, such as devices located across a communications network and/or devices serially or locally connected to the computing device 100. In an aspect, for example, the communications module 106 may include one or more buses, and may further include transmit chain modules and receive chain modules associated with a wireless or wired transmitter and receiver, respectively, operable for interfacing with external devices.

Additionally, the computing device 100 may include a data store 108, which can be any suitable combination of hardware and/or software, that provides for mass storage of information, databases, and programs. For example, the data store 108 may be or may include a data repository for applications and/or related parameters not currently being executed by processor(s) 102. In addition, the data store 108 may be a data repository for an operating system, application, driver, service, etc., executing on the processor 102, and/or one or more other modules of the computing device 100.

The computing device 100 may also include a user interface module 110 operable to receive inputs from a user of the computing device 100 and further operable to generate outputs for presentation to the user (e.g., via a display interface to a display device). The user interface module 110 may include one or more input devices, including but not limited to a keyboard, a number pad, a mouse, a touch-sensitive display, a navigation key, a function key, a microphone, a voice recognition module, or any other mechanism capable of receiving an input from a user, or any combination thereof. Further, the user interface module 110 may include one or more output devices, including but not limited to a display interface, a speaker, a haptic feedback mechanism, a printer, any other mechanism capable of presenting an output to a user, or any combination thereof.

The computing device 100 can include or can execute, e.g., via an operating system (not shown), one or more applications, which may include a web browser or other application that can display, via user interface module 110, a map generated by map generating module 112. The computing device 100 can execute the map generating module 112 for generating a map of a building or other area (e.g., multiple buildings or areas, a city or cities, a country or countries, a continent or continents, etc.), which may include a geographic information system (GIS), or may include GIS information. In an example, the map generating module 112 may obtain data regarding markers associated with the building, multiple buildings, an area, multiple areas, etc., that may be associated with a company or organization using the map. In one example, the markers can represent, or correspond to, assets of an access control system, such as doors, locks, cameras, sensors, or other assets, events triggered by an asset (e.g., alarms, detected security events, etc.), and/or the like. In an example, the data regarding the markers can indicate, for each marker, a unique identifier, a type indication, GIS information (e.g., global positioning system (GPS) or other coordinates corresponding to a location of the marker), etc. In an example, the map generating module 112 can include one or more of a tile defining module 114 for defining a boundary tile and/or subtiles of the boundary tile associated with markers in the map, a marker displaying module 116 for displaying markers on the map, and/or a zoom level module 118 for detecting a zoom level associated with the map for determining which and/or what type of markers to display, a boundary tile size, a number of subtiles for dividing the boundary tile, etc., as described herein.

For example, markers (e.g., pins) on a map can represent physical assets such as doors or cameras, or events (e.g., triggered alarms), etc. When a large dataset of markers is to be rendered on a map, aspects described herein can be used to generate and/or render a map with less markers, as least initially or at certain zoom levels, which can improve performance and/or readability of the map. For example, based on the full marker dataset, tile defining module 114 can define a smallest possible rectangular tile (referred to herein as the boundary tile) that encompasses all makers. The boundary tile can be defined by a lower left most marker location and an upper right most marker location (or a lower right most marker location and an upper left most marker location) of the markers in the data, or of the markers that correspond to a portion of the map displayed at a present zoom level. The markers and/or boundary tile can be defined in latitude and longitude coordinates. In an example, each of the lower left most marker location and upper right most marker location can include positions of multiple markers (e.g., the lower left most marker location can include a coordinate on a first axis of the left most marker and a coordinate on a second axis of the lowest marker).

In an example, tile defining module 114 can split the boundary tile into a variably assigned grid of tiles, such as a 16x16 grid (e.g., 256 tiles), having subtiles of substantially equal size (e.g., except for a last row or column of tiles). In this specific example, tile defining module 114 can split the boundary tile by dividing the boundary tile length and width by 16 to generate the grid. Tile defining module 114 can also assign each marker in the original dataset to a corresponding subtile in the grid of subtiles. In an example, marker displaying module 116 can select a representative marker for each subtile, which can be the centermost marker of each subtile, a virtual marker defined at a certain location (e.g., the center) in the subtile, etc. In one example, the representative marker may include a text display including a count of how many markers it represents within the tile.

Map generating module 112 can initially display the map, via user interface module 110, at a zoomed out level, and marker displaying module 116 can display only the representative markers in the zoomed out level. As the map is zoomed in on (e.g., via zoom events, which a user can generate using user interface module 110), zoom level module can monitor the zoom level to detect when/if the zoom level achieves a variably assigned zoom threshold. If the threshold is achieved or surpassed, for example, marker displaying module 116 can determine which subtiles are visible in the zoomed in map (e.g., within a mapping viewport of the map on the interface), and for those tiles detected within the viewport, marker displaying module 116 can display all markers within the visible subtiles at that time. Delaying displaying of all markers for a visible area until the zoom is at least at a threshold, in this regard, can limit the overhead on the browser and confusion for the user compared to displaying all markers at all zoom levels. Moreover, in an example, an additional level of marker bundling can be included to help detect scattered concentrations of markers.

Referring to FIG. 2, an example of a method 200 for displaying a map including markers related to certain objects is depicted. The operations of the method 200 may be performed by one or more modules or components of the computing device 100, map generating module 112, etc., as described herein.

At 202, the method 200 may optionally include obtaining a marker data set of multiple markers having associated geographic locations. For example, map generating module 112, e.g., in conjunction with one or more processors 102, memory/memories 104, etc., can obtain the marker data set of multiple markers having associated geographic locations. In an example, map generating module 112 can obtain the marker data set as a list of markers having associated information, such as an identifier (e.g., a unique identifier that is unique at least among the other markers in the marker data set, a globally unique identifier (GUID), etc.), a type identifier of a type of marker (e.g., a type identifier for an asset, a type of asset, such as door, sensor, etc., a type identifier for a trigger (e.g., an event, alarm, status, and/or the like, which may or may not be associated with an asset in the list of markers), GIS information for the marker (e.g., GPS coordinates), etc. In one example, map generating module 112 can obtain the marker data set from a building management system or other system that can provide an inventory of assets, alarms, etc. associated with a company. In an example, map generating module 112 can obtain the marker data set based on a request via the building management system (e.g., a request to obtain the marker data set for viewing assets on a map, viewing events, alarms, triggers, or other status information on a map, etc.). In any case, map generating module 112 can obtain the marker data set as a list of markers and associated data. In accordance with aspects described herein, the entire marker data set can be considered in displaying representative markers on a map, such to include some indication of all markers without necessarily displaying all of the markers at one time.

At 204, the method 200 may include generating, based on a marker data set of multiple markers, a boundary tile that encompasses the multiple markers on the map. For example, tile defining module 114, e.g., in conjunction with one or more processors 102, memory/memories 104, map generating module 112, etc., can generate, based on the marker data set of multiple markers, the boundary tile that encompasses the multiple markers on the map. For example, tile defining module 114 can define the boundary tile based on the multiple markers by determining a size and/or location of the boundary tile to encompass all of the multiple markers. In an example, tile defining module 114 can determine a size and/or location for the boundary tile based on markers determined as having an outer most location in one or more directions, such as based on a marker having a lowest left most location and a marker having an upper right most location, or based on a marker having a lowest right most location and a marker having an upper left most location, based on a marker having a lowest location, a marker having a most left location, a marker having an upper most location, and a marker having a right most location, etc. In an example, tile defining module 114 can generate the boundary tile to have a lower left corner associated with the lowest location and the left most location from the marker data set and/or an upper right corner associated with the upper most and the right most location from the marker data set. In another example, tile defining module 114 can generate the boundary tile to have additional boundary between the outer most locations and the edge of the boundary tile.

At 206, the method 200 may include assigning each of the markers in the multiple markers to one subtile in a grid of subtiles representing portions of the boundary tile. For example, tile defining module 114, e.g., in conjunction with one or more processors 102, memory/memories 104, map generating module 112, etc., can assign each of the markers in the multiple markers to one subtile in the grid of subtiles, where each subtile represents a portion of the boundary tile.

At 208, method 200 may optionally include dividing the boundary tile into the grid of subtiles. For example, tile defining module 114, e.g., in conjunction with one or more processors 102, memory/memories 104, map generating module 112, etc., can divide the boundary tile into the grid of subtiles. In an example, tile defining module 114 can define each subtile as a portion of the boundary tile, which can include defining a starting and/or ending location (e.g., a lower left most and upper right most location, or upper left most and lower right most location) for the subtile. For example, tile defining module 114 can define the starting and/or ending location for each tile in latitude and longitude coordinates (e.g., GPS coordinates or other units that can be mapped to a portion of the map being shown on the interface). The subtiles can be of the same size, and/or can include one or more subtiles of a smaller or larger size (e.g., where the boundary tile size does not evenly divide into the desired subtile size). In one example, the grid of subtiles can be 16x16 subtiles for a total of 256 subtiles, and the boundary tile can be substantially equally divided into the 256 subtiles, such that the subtiles can be adjacent to one another in latitudinal and longitudinal coordinates.

Referring back to 206, in an example, tile defining module 114 can assign each of the markers to the subtile based on determining that a location of the marker is within the subtile (e.g., based on latitude and longitude coordinates of the marker being within a latitudinal and longitudinal area defined by the subtile). For example, given a marker, tile defining module 114 can determine which of the subtiles to which the marker belongs based on determining that the location of the marker is within an area defined by the starting and ending location of the subtile (e.g., based on determining that a latitudinal coordinate of the marker is within a range of latitudinal coordinates of the starting and ending location and that a longitudinal coordinate of the marker is within a range of longitudinal coordinates of the starting and ending location). In an example, tile defining module 114 can assign the markers to the subtiles so the markers in the subtile can subsequently be determined. In one example, tile defining module 114 can set additional metadata for the markers to indicate a subtile index to which the marker is assigned (e.g., between 0-255 for the example of 256 subtiles). In another example, tile defining module 114 can generate a list of markers per subtile (e.g., a list of marker indices or other identifiers of the markers) for each subtile.

At 210, method 200 may include, for at least one subtile in the grid of subtiles having at least one of the multiple markers assigned, displaying, on the map, a representative marker of the at least one of the multiple markers. For example, marker displaying module 116, e.g., in conjunction with one or more processors 102, memory/memories 104, map generating module 112, etc., can, for at least one subtile in the grid of subtiles having at least one of the multiple markers assigned, display, on the map, the representative marker of the at least one of the multiple markers. In one example, marker displaying module 116 can display the representative marker in a location of a marker within the subtile that has a location closest to a center of the at least one subtile. In another example, marker displaying module 116 can display the representative marker in a location that is the center (or near the center) of the subtile. In yet another example, marker displaying module 116 can display the representative marker at a location that is based on an average of the marker locations in the subtile (e.g., such that the location can be representative of an area where the most markers are present within the at least one subtile), etc. In an example, map generating module 112 may have displayed the map via user interface module 110, which may be initially displayed at a zoomed out level, such that all of the subtiles are displayed. For each subtile that has at least one marker, for example, marker displaying module 116 may display, via the interface, only one representative marker in the subtile, instead of rendering all markers, in the portion of the map being displayed.

In one example, marker displaying module 116 can determine which of the markers for a given subtile has a location closest to a center location in the subtile, and may select that marker as the representative marker. In this example, marker displaying module 116 can display the representative marker in its corresponding location. In yet another example, marker displaying module 116 can display the representative marker with a numeric value, a color or gradient, etc. on the marker that indicates the number of markers (or a range of marker) within the subtile. In this regard, for example, delay can be minimized by deploying the fixed grid with only the representative marker (if the subtile has at least one marker) instead of rendering all markers.

At 212, method 200 can optionally include removing, from the grid of subtiles, a portion of the subtiles in the grid of subtiles that have no markers assigned. For example, tile defining module 114, e.g., in conjunction with one or more processors 102, memory/memories 104, map generating module 112, etc., can remove, from the grid of subtiles, the portion of the subtiles in the grid of subtiles that have no markers assigned. For example, tile defining module 114 can store the grid of subtiles, or related information that defines the grid of subtiles, in memory, which can include, for each subtile, a subtile identifier, location defining information (e.g., a starting and ending location of the subtile), etc. Thus, for example, tile defining module 114 can remove, from the list of subtiles stored in memory, the subtiles not having associated markers. In this regard, for example, processing for the subtiles having no markers can be removed to further decrease delay when obtaining location for the markers, displaying the markers, as described herein, etc.

At 214, method 200 can optionally include, for each subtile of a portion of subtiles in the grid of subtiles displayed after a zoom event on the map, displaying each of the multiple markers assigned to the subtile in an associated location on the map. For example, marker displaying module 116, e.g., in conjunction with one or more processors 102, memory/memories 104, map generating module 112, etc., can, for each subtile of a portion of subtiles in the grid of subtiles displayed after a zoom event on the map, display each of the multiple markers assigned to the subtile in an associated location on the map. For example, zoom level module 118 can detect a change in zoom level on the map, which can be caused by a user interfacing with user interface module 110 to change the zoom level. When zoom level module 118 detects the zoom level achieves or exceeds a threshold, marker displaying module 116 can determine which portions of subtiles are being displayed on the map at the zoom level, and for these subtiles, marker displaying module 116 can display the markers associated with each subtile at its respective location (and/or can remove or replace the representative marker with an appropriate marker). By this time, for example, the viewable subtiles can have been considerably restrained, and thus the number of markers to display has been substantially reduced in contrast to the initial pool of markers. At this zoom level, a more accurate depiction of the markers can be provided in this regard.

In some examples, if the zoom level is changed and no longer achieves or exceeds the threshold, marker displaying module 116 can revert to displaying representative markers for the subtiles having at least one marker, as described above.

Referring to FIG. 3, an example of a method 300 for displaying a map including markers related to certain objects based on zoom level is depicted. The operations of the method 300 may be performed by one or more modules or components of the computing device 100, map generating module 112, etc., as described herein.

At 302, the method 300 may optionally include obtaining a marker data set of multiple markers having associated geographic locations. For example, map generating module 112, e.g., in conjunction with one or more processors 102, memory/memories 104, etc., can obtain the marker data set of multiple markers having associated geographic locations, as similarly described for action 202 in method 200 above.

At 304, the method 300 may include generating, based on a marker data set of multiple markers, a boundary tile that encompasses the multiple markers on the map. For example, tile defining module 114, e.g., in conjunction with one or more processors 102, memory/memories 104, map generating module 112, etc., can generate, based on the marker data set of multiple markers, the boundary tile that encompasses the multiple markers on the map, as similarly described for action 204 in method 200 above.

At 306, the method 300 may include assigning each of the markers in the multiple markers to one subtile in a grid of subtiles representing portions of the boundary tile. For example, tile defining module 114, e.g., in conjunction with one or more processors 102, memory/memories 104, map generating module 112, etc., can assign each of the markers in the multiple markers to one subtile in the grid of subtiles, where each subtile represents a portion of the boundary tile, as similarly described for action 206 in method 200 above.

At 308, method 300 may optionally include dividing the boundary tile into the grid of subtiles. For example, tile defining module 114, e.g., in conjunction with one or more processors 102, memory/memories 104, map generating module 112, etc., can divide the boundary tile into the grid of subtiles, as similarly described for action 208 in method 200 above.

At 312, method 300 can optionally include removing, from the grid of subtiles, a portion of the subtiles in the grid of subtiles that have no markers assigned. For example, tile defining module 114, e.g., in conjunction with one or more processors 102, memory/memories 104, map generating module 112, etc., can remove, from the grid of subtiles, the portion of the subtiles in the grid of subtiles that have no markers assigned, as similarly described for action 212 in method 200 above.

At 314, method 300 can include comparing a zoom level of the map being displayed to a threshold. For example, zoom level module 118, e.g., in conjunction with one or more processors 102, memory/memories 104, map generating module 112, etc., can compare the zoom level to the threshold. In one example, the zoom level can be a numeric level that increases as the map is zoomed on the interface and/or decreases as the map is zoomed out on the interface. In another example, zoom level module 118 can set the threshold for the zoom level based on a number of markers in the data set, a number of markers in one or more subtiles, etc. In yet another example, zoom level module 118 can additionally or alternatively compare a number of markers to be displayed at the current zoom level to a threshold.

Where the zoom level of the map is less than the threshold (e.g., the map is not at a sufficient zoom level for displaying all markers), at 316, method 300 can optionally include displaying, for at least one subtile, in a portion of subtiles displayed on the map, a representative marker of the at least one of the multiple markers for at least one subtile in the grid of subtiles having at least one of the multiple markers assigned. For example, marker displaying module 116, e.g., in conjunction with one or more processors 102, memory/memories 104, map generating module 112, etc., can, for at least one subtile in the portion of the grid of subtiles, displayed on the map, having at least one of the multiple markers assigned, display, on the map, the representative marker of the at least one of the multiple markers, as similarly described for action 210 in method 200 above. For example, at a current zoom level, which may be an initial zoom or a zoom level set via the interface, as described, a portion of the subtiles in the grid of subtiles may be displayed. For at least one subtile of the portion of the subtiles being displayed, map generating module 112 can display the determined representative marker in its corresponding location on the map. In one example, zoom level module 118 can alternatively compare the number of markers to be displayed on the map at its current zoom level to a threshold, and may display representative markers where the number achieves the threshold.

Where the zoom level of the map achieves the threshold (e.g., the map is at a sufficient zoom level for displaying all markers), at 318, method 300 can optionally include, for each subtile of a portion of subtiles in the grid of subtiles displayed after a zoom event on the map, displaying each of the multiple markers assigned to the subtile in an associated location on the map. For example, marker displaying module 116, e.g., in conjunction with one or more processors 102, memory/memories 104, map generating module 112, etc., can, for each subtile of a portion of subtiles in the grid of subtiles displayed after a zoom event on the map, display each of the multiple markers assigned to the subtile in an associated location on the map, as similarly described for action 214 in method 200 above. In one example, zoom level module 118 can alternatively compare the number of markers to be displayed on the map at its current zoom level to a threshold, and may display all markers for the portion of the map being displayed where the number is less than the threshold.

At 320, method 300 can optionally include detecting a zoom event on the map. For example, zoom level module 118, e.g., in conjunction with one or more processors 102, memory/memories 104, map generating module 112, etc., can detect the zoom event on the map. For example, zoom level module 118 can receive, from the interface, an application executing the interface to display the map, etc., an indication of a zoom event changing the zoom level of the map being displayed, where the zoom event can include corresponding information, such as a new zoom level for the map. In one example, based on receiving the zoom event information, method 300 can proceed to action 308 or 314.

Thus, in one example, dividing the boundary tile into the grid of subtiles can be based on the zoom level of the map being shown (and may be modified after the zoom event). For example, tile defining module 114 may define the subtiles (e.g., the number of subtiles, size of subtiles, etc.) based on the zoom level being displayed on the map. In another example, tile defining module 114 may define the subtiles based on the number of markers in locations corresponding to the zoom level (e.g., corresponding to the portion of the map being shown). For example, where the number of markers exceeds a threshold, tile defining module 114 can include determine an amount of subtiles to be included in the grid of subtiles. In another example, comparing the zoom level to the threshold, at 314, can occur when a zoom event is detected.

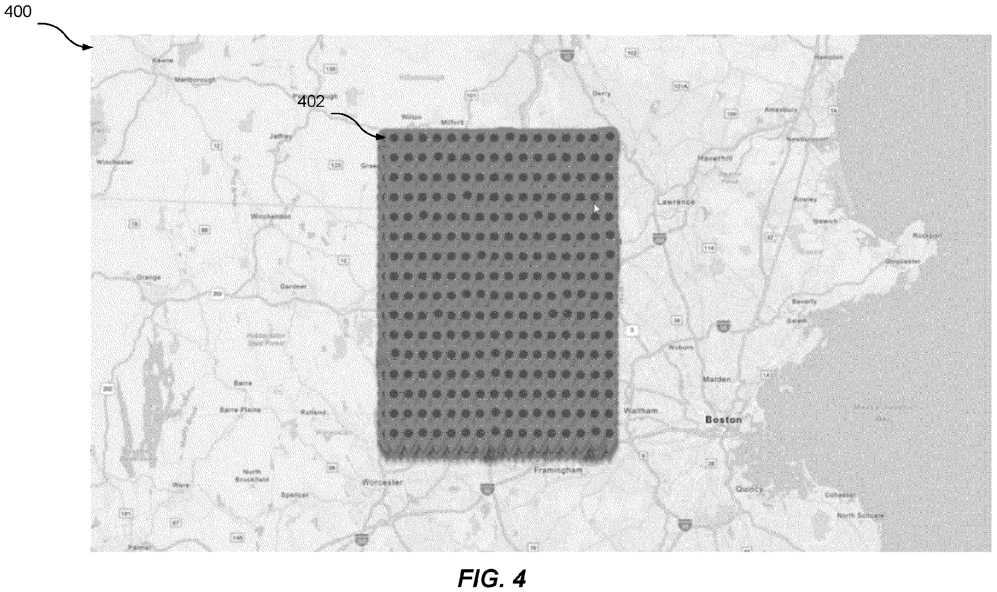

FIG. 4 illustrates an example of a map 400 displayed on an interface that includes all markers in an area on the map, such as marker 402. Conventionally, as described, all markers may be displayed on a map, which may make the map difficult to interpret and/or may impact performance of a system displaying the map 400.

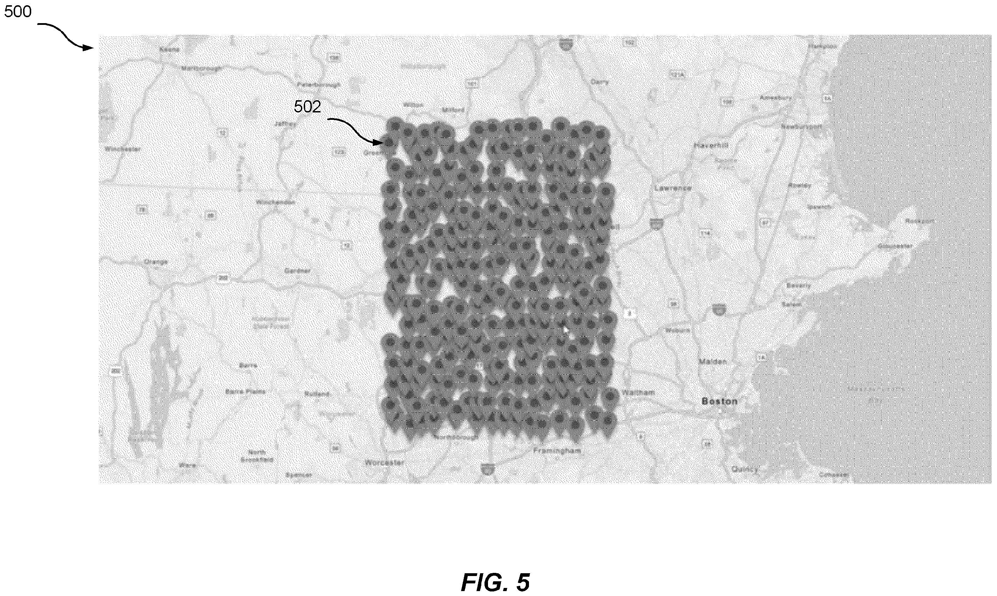

FIG. 5 illustrates an example of a map 500 displayed on an interface that includes one representative marker, such as marker 502, per grid of subtiles at a first zoom level. In map 500, tile defining module 114 defines a boundary, as previously described, which can include or be based on coordinates of a marker having a lowest location, a marker having a left most location, a marker having an upper most location, and a marker having a right most location. Tile defining module 114 can then subdivide the boundary tile into multiple subtiles (e.g., a 16x16 matrix of 256 subtiles or otherwise), and marker displaying module 116 can display a representative marker in each subtile having at least one marker. This process can produce a substantially less cluttered map 500 than map 400 of FIG. 4.

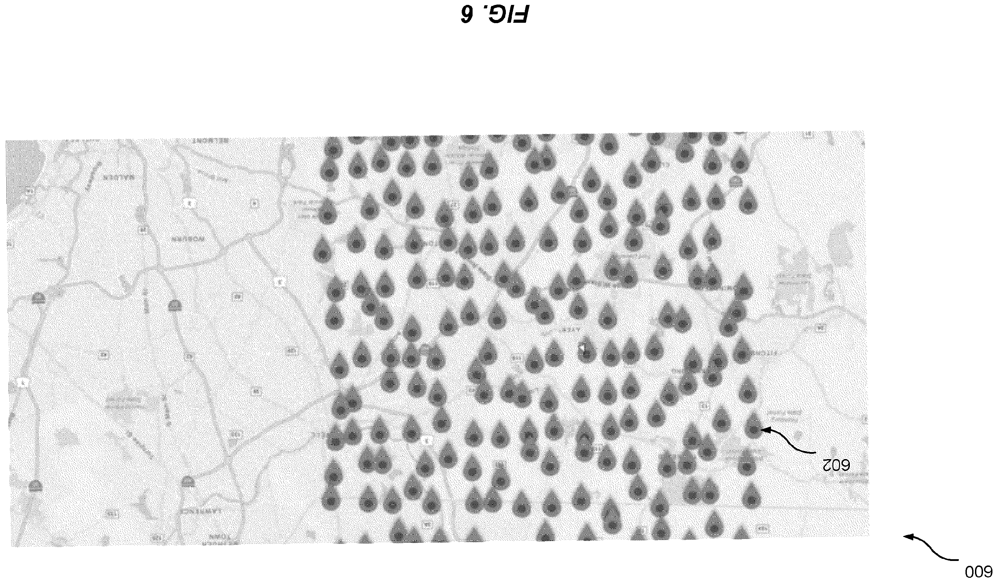

FIG. 6 illustrates an example of a map 600 displayed on an interface that includes one representative marker, such as marker 602, per grid of subtiles at a second zoom level. In map 600, no changes have been made by marker displaying module 116, and the same representative markers are displayed in their given subtiles, though the zoom level may prevent some of the markers from being shown. In the examples described above, this zoom level may not have achieved the threshold for displaying all markers that are visible in the zoom level of the map 600.

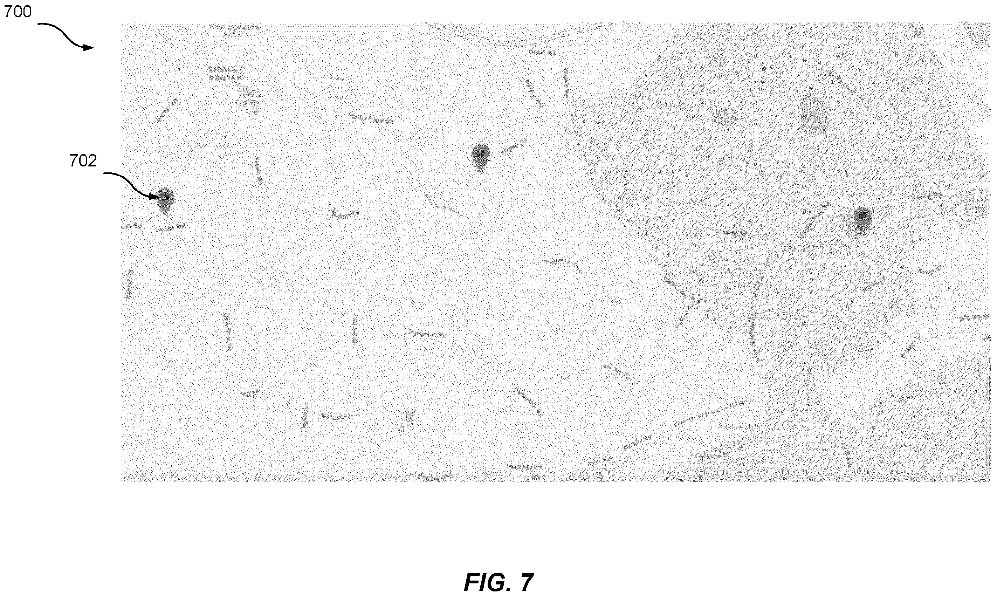

FIG. 7 illustrates an example of a map 700 displayed on an interface that includes all markers, such as marker 702, in the portion of subtiles being displayed at a third zoom level. In map 700, the zoom level may have achieved the threshold, and all of the markers in each subtile that is shown in the current zoom level of the map are being displayed. In this example, based on detecting the zoom level achieving the threshold, marker displaying module 116 can draw all of the markers for each of the subtiles within the display view. In one example, where the representative marker is an actual marker in the data set, marker displaying module 116 can retain displaying the representative marker and can add the additional markers in the data set of the given subtile. Where the representative marker is a virtual marker (e.g., a marker in the center of the subtile), marker displaying module 116 can remove the virtual marker and instead display the markers in the data set that are in the subtiles being displayed.

As described above, if the map is zoomed back out and no longer achieves the threshold, marker displaying module 116 can remove the markers of the data set on the map display and revert to the representative markers (e.g., as in map 500 or 600).

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memorie s configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

Further embodiments of the present invention may be summarized as follows. Any of these embodiments can be claimed in a separate claim, e.g. by substituting the word "embodiment" by "claim", in particular in the order as mentioned below and/or in any combination with any embodiment described above or with any of the features of the attached claims:
Embodiment 1. A computer-implemented method for displaying markers on a map, comprising:
   generating, based on a marker data set of multiple markers, a boundary tile that encompasses the multiple markers on the map;
   assigning each of the markers in the multiple markers to one subtile in a grid of subtiles, wherein each subtile in the grid of subtiles represents a portion of the boundary tile; and
   for at least one subtile in the grid of subtiles having at least one of the multiple markers assigned, displaying, on the map, a representative marker of the at least one of the multiple markers having a location closest to a center of the at least one subtile.
Embodiment 2. The computer-implemented method of embodiment 1, wherein the representative marker indicates a number of the multiple markers assigned to the at least one subtile.
Embodiment 3. The computer-implemented method of embodiment 1 or 2, further comprising for each subtile of a portion of subtiles in the grid of subtiles displayed after a zoom event on the map, displaying each of the multiple markers assigned to the subtile in an associated location on the map.
Embodiment 4. The computer-implemented method of embodiment 3, wherein displaying each of the multiple markers assigned to the subtile is based on a zoom level of the zoom event achieving a threshold.
Embodiment 5. The computer-implemented method of any of embodiments 1 to 4, further comprising removing, from the grid of subtiles, a portion of the subtiles in the grid of subtiles that have no markers assigned to the portion of subtiles.
Embodiment 6. The computer-implemented method of any of embodiments 1 to 5, wherein generating the boundary tile includes generating the boundary tile as a rectangle that is based on a lowest marker of the multiple markers, a left most marker of the multiple markers, an upper most marker of the multiple markers, and a right most marker of the multiple markers on the map.
Embodiment 7. The computer-implemented method of any of embodiments 1 to 6, further comprising dividing the boundary tile into the grid of subtiles, wherein each subtile in the grid of subtiles is of a same size.
Embodiment 8. The computer-implemented method of any of embodiments 1 to 7, wherein the multiple markers correspond to access control system assets deployed at one or more areas.
Embodiment 9. The computer-implemented method of any of embodiments 1 to 8, wherein the multiple markers correspond to events detected by assets deployed at one or more areas.
Embodiment 10. An apparatus for displaying markers on a map, comprising:
   one or more memories; and
   one or more processors coupled to the one or more memories and configured to execute instructions stored on the one or more memories to:
      generate, based on a marker data set of multiple markers, a boundary tile that encompasses the multiple markers on the map;
      assign each of the markers in the multiple markers to one subtile in a grid of subtiles, wherein each subtile in the grid of subtiles represents a portion of the boundary tile; and
      for at least one subtile in the grid of subtiles having at least one of the multiple markers assigned, display, on the map, a representative marker of the at least one of the multiple markers having a location closest to a center of the at least one subtile.
Embodiment 11. The apparatus of embodiment 10, wherein the representative marker indicates a number of the multiple markers assigned to the at least one subtile.
Embodiment 12. The apparatus of embodiment 10 or 11, wherein the one or more processors are configured to, for each subtile of a portion of subtiles in the grid of subtiles displayed after a zoom event on the map, display each of the multiple markers assigned to the subtile in an associated location on the map.
Embodiment 13. The apparatus of embodiment 12, wherein the one or more processors are configured to display each of the multiple markers assigned to the subtile based on a zoom level of the zoom event achieving a threshold.
Embodiment 14. The apparatus of any of embodiments 10 to 13, wherein the one or more processors are configured to remove, from the grid of subtiles, a portion of the subtiles in the grid of subtiles that have no markers assigned to the portion of subtiles.
Embodiment 15. The apparatus of any of embodiments 10 to 14, wherein the one or more processors are configured to generate the boundary tile as a rectangle that is based on a lowest marker of the multiple markers, a left most marker of the multiple markers, an upper most marker of the multiple markers, and a right most marker of the multiple markers on the map.
Embodiment 16. The apparatus of any of embodiments 10 to 15, wherein the one or more processors are configured to divide the boundary tile into the grid of subtiles, wherein each subtile in the grid of subtiles is of a same size.
Embodiment 17. The apparatus of any of embodiments 10 to 16, wherein the multiple markers correspond to access control assets deployed within a building.
Embodiment 18. The apparatus of any of embodiments 10 to 17, wherein the multiple markers correspond to events detected by assets deployed at one or more areas.
Embodiment 19. One or more computer-readable media storing instructions, executable by one or more processors, for indicating occupancy of a point of interest in a room, the instructions comprising instructions for:
   generating, based on a marker data set of multiple markers, a boundary tile that encompasses the multiple markers on the map;
   assigning each of the markers in the multiple markers to one subtile in a grid of subtiles, wherein each subtile in the grid of subtiles represents a portion of the boundary tile; and
   for at least one subtile in the grid of subtiles having at least one of the multiple markers assigned, displaying, on the map, a representative marker of the at least one of the multiple markers having a location closest to a center of the at least one subtile.
Embodiment 20. The one or more computer-readable media of embodiment 19, wherein the representative marker indicates a number of the multiple markers assigned to the at least one subtile.

## Claims

1. A computer-implemented method for displaying markers on a map, comprising:
generating, based on a marker data set of multiple markers, a boundary tile that encompasses the multiple markers on the map;
assigning each of the markers in the multiple markers to one subtile in a grid of subtiles, wherein each subtile in the grid of subtiles represents a portion of the boundary tile; and
for at least one subtile in the grid of subtiles having at least one of the multiple markers assigned, displaying, on the map, a representative marker of the at least one of the multiple markers having a location closest to a center of the at least one subtile.

2. The computer-implemented method of claim 1, wherein the representative marker indicates a number of the multiple markers assigned to the at least one subtile.

3. The computer-implemented method of claim 1 or 2, further comprising for each subtile of a portion of subtiles in the grid of subtiles displayed after a zoom event on the map, displaying each of the multiple markers assigned to the subtile in an associated location on the map;
optionally, wherein displaying each of the multiple markers assigned to the subtile is based on a zoom level of the zoom event achieving a threshold.

4. The computer-implemented method of any of claims 1 to 3, further comprising removing, from the grid of subtiles, a portion of the subtiles in the grid of subtiles that have no markers assigned to the portion of subtiles.

5. The computer-implemented method of any of claims 1 to 4, wherein generating the boundary tile includes generating the boundary tile as a rectangle that is based on a lowest marker of the multiple markers, a left most marker of the multiple markers, an upper most marker of the multiple markers, and a right most marker of the multiple markers on the map; and/or
further comprising dividing the boundary tile into the grid of subtiles, wherein each subtile in the grid of subtiles is of a same size.

6. The computer-implemented method of any of claims 1 to 5, wherein the multiple markers correspond to access control system assets deployed at one or more areas; and/or
wherein the multiple markers correspond to events detected by assets deployed at one or more areas.

7. An apparatus for displaying markers on a map, comprising:
one or more memories; and
one or more processors coupled to the one or more memories and configured to execute instructions stored on the one or more memories to:
generate, based on a marker data set of multiple markers, a boundary tile that encompasses the multiple markers on the map;
assign each of the markers in the multiple markers to one subtile in a grid of subtiles, wherein each subtile in the grid of subtiles represents a portion of the boundary tile; and
for at least one subtile in the grid of subtiles having at least one of the multiple markers assigned, display, on the map, a representative marker of the at least one of the multiple markers having a location closest to a center of the at least one subtile.

8. The apparatus of claim 7, wherein the representative marker indicates a number of the multiple markers assigned to the at least one subtile.

9. The apparatus of claim 7 or 8, wherein the one or more processors are configured to, for each subtile of a portion of subtiles in the grid of subtiles displayed after a zoom event on the map, display each of the multiple markers assigned to the subtile in an associated location on the map;
optionally, wherein the one or more processors are configured to display each of the multiple markers assigned to the subtile based on a zoom level of the zoom event achieving a threshold.

10. The apparatus of any of claims 7 to 9, wherein the one or more processors are configured to remove, from the grid of subtiles, a portion of the subtiles in the grid of subtiles that have no markers assigned to the portion of subtiles.

11. The apparatus of any of claims 7 to 10, wherein the one or more processors are configured to generate the boundary tile as a rectangle that is based on a lowest marker of the multiple markers, a left most marker of the multiple markers, an upper most marker of the multiple markers, and a right most marker of the multiple markers on the map; and/or
wherein the one or more processors are configured to divide the boundary tile into the grid of subtiles, wherein each subtile in the grid of subtiles is of a same size.

12. The apparatus of any of claims 7 to 11, wherein the multiple markers correspond to access control assets deployed within a building; and/or
wherein the multiple markers correspond to events detected by assets deployed at one or more areas.

13. One or more computer-readable media storing instructions, executable by one or more processors, for indicating occupancy of a point of interest in a room, the instructions comprising instructions for:
generating, based on a marker data set of multiple markers, a boundary tile that encompasses the multiple markers on the map;
assigning each of the markers in the multiple markers to one subtile in a grid of subtiles, wherein each subtile in the grid of subtiles represents a portion of the boundary tile; and
for at least one subtile in the grid of subtiles having at least one of the multiple markers assigned, displaying, on the map, a representative marker of the at least one of the multiple markers having a location closest to a center of the at least one subtile.

14. The one or more computer-readable media of claim 13, wherein the representative marker indicates a number of the multiple markers assigned to the at least one subtile.
